# EUROPEAN PATENT APPLICATION

(11) **EP 2 001 025 A1**
(43) Date of publication of application: **10.12.2008**
(21) Application number: 07738198.6
(22) Date of filing: 09.03.2007
(51) Int. Cl.: G11B 20/12, G11B 7/0045, G11B 20/18

(54) **OPTICAL DISC DEVICE AND RECORD CONTROL METHOD**

(30) Priority: 30.03.2006 JP 2006095052
(71) Applicant: Sony Corporation, Minato-ku Tokyo 108-0075 (JP)
(72) Inventor: YORIMOTO, Kenji, Minato-ku, Tokyo 108-0075 (JP); KARIMOTO, Takashi, Minato-ku, Tokyo 108-0075 (JP); SHIKATA, Hideto, Minato-ku, Tokyo 108-0075 (JP); KOGAWA, Mutsumi, Minato-ku, Tokyo 108-0075 (JP); ITO, Naoya, Minato-ku, Tokyo 108-0075 (JP); OHISHI, Chikara, Minato-ku, Tokyo 108-0075 (JP); TAKEMURA, Shinichi, Minato-ku, Tokyo 108-0075 (JP); ITO, Tomoyuki, Minato-ku, Tokyo 108-0075 (JP); HISANO, Kei, Minato-ku, Tokyo 108-0075 (JP); YAMAMOTO, Masaaki, Minato-ku, Tokyo 108-0075 (JP)
(74) Representative: Körber, Martin Hans
(86) International application number: PCT/JP2007/054713
(87) International publication number: WO 2007/113989

(57) **Abstract**

Data can be recorded on an optical disc at high speed and assuredly even in a case in which a recording error has occurred. In a case in which a recording error regarding data on the optical disc is detected, recording of the data is restarted avoiding recording in a predetermined range starting from an address at which the recording error has occurred, and also a recording area in which recording of the data is restarted is separated from a recording area including the address at which the recording error has occurred. When recording of the data on the optical disc is completed, information the recording area has been split is recorded in a management area on the optical disc.

## Description

### Technical Field

The present invention relates to an optical disc apparatus and a recording control method, which are suitable for being applied to a case of recording data on an optical disc.

### Background Art

Hitherto, use of rewritable-type (rewritable -RW type) optical discs on which users can freely record data, write-once-type (write-once -R type) optical discs, and optical disc apparatuses corresponding to these discs has been becoming significantly widespread.

In addition, for a purpose of causing a recording capacity to be further increased, Blu-ray Discs (Blu-ray Discs) (a registered trademark of Sony Corporation) which employ blue laser light (a wavelength of 405 nm) whose wavelength is shorter than that used in conventional CDs (Compact Discs) or DVDs (Digital Versatile Discs), have been developed. For the Blu-ray Discs, rewritable-type BD-REs and write-once-type BD-Rs exist (for example, see Japanese Patent Application No. 2006-024287).

Incidentally, in recent years, in video recording apparatuses, for example, nonportable-type video recorders or video handy cameras, use of video recording apparatuses which record video on an optical disc instead of a magnetic tape which used to be used has been becoming widespread. In such a video recording apparatus using an optical disc, it is necessary to record, in real time, video supplied from outside or stream data of video which is being shot.

Then, since pieces of stream data to be recorded are continuously and sequentially supplied in the above-described real-time recording of stream data on an optical disc, even in a case in which a recording error has occurred, recording is not allowed to be suspended because of the error and it is also required to perform recording in a manner such that the stream data can be played back without being suspended.

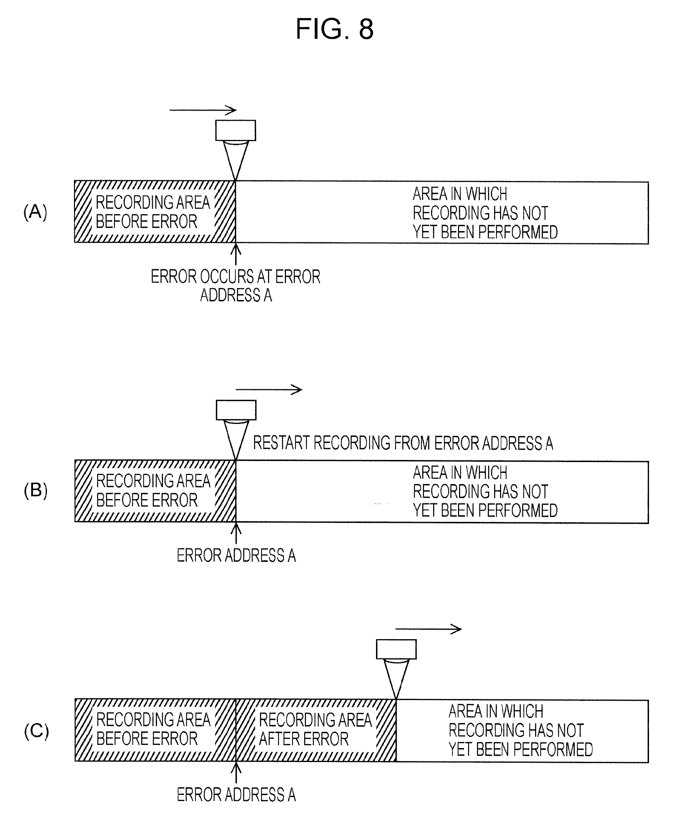

In order to deal with such a request, for example, as shown in part (A) of Fig. 8, in a case in which a recording error has occurred at an error address A during a real-time recording of the stream data on a write-once-type optical disc, there is a method in which, subsequently, recording of the stream data continues at and after the error address A as shown in part (B) of Fig. 8. In this case, even though the stream data which has been recorded is continuous before and after the occurrence of the error as shown in part (C) of Fig. 8, there is a problem that there is a possibility that a factor which has induced the recording error (for example, a defect of the disc) may cause a recording error again.

In order to prevent such a reoccurrence of a recording error, it is considered that data recording is avoided in a portion near a position where the recording error has occurred and recording is restarted from an address which is a little apart from the position where the recording error has occurred.

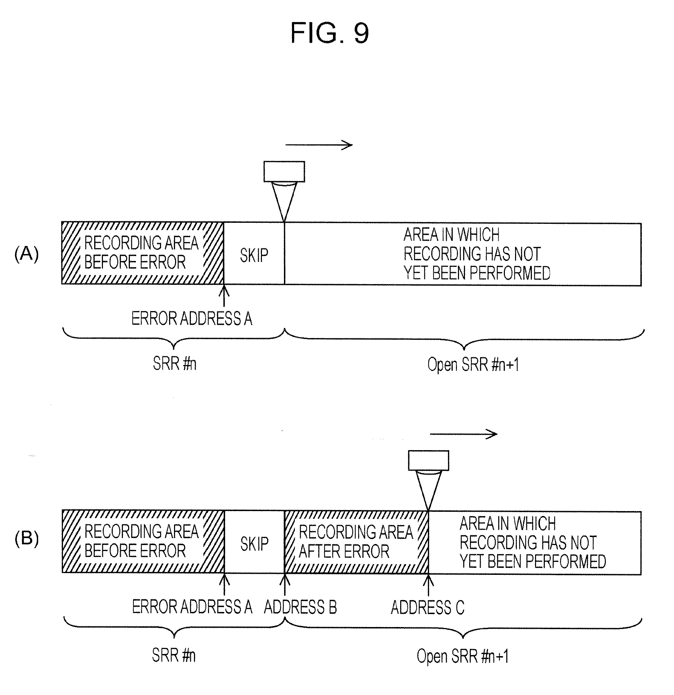

That is, as shown in part (A) of Fig. 9, in a case in which a recording error has occurred at the error address A during a real-time recording of the stream data on the write-once-type optical disc, if recording is restarted from an address B apart from the error address A, a portion near the error address A and in which there is a high possibility that a recording error reoccurs can be skipped, and the stream data can be assuredly recorded.

Here, on a write-once-type BD-R, in a case in which subsequent pieces of data such as stream data are recorded, a recording mode referred to as an SRM (Sequential Recording Mode) is used, and ranges referred to as SRR (Sequential Recording Ranges) are configured on an optical disc in the SRM, and pieces of data are continuously recorded in the SRR. The SRR are made in a manner such that they can be arbitrarily split (divide) to form new SRR. In addition, with respect to the SRR in which no more data is to be recorded, the state thereof can be changed from "open" which indicates recordable to "close" which indicates not recordable, and recording therein can be prohibited. Thus, as shown in part (B) of Fig. 9, in a case in which the area from the error address A to the address B is skipped and recording is performed, in order to prevent recording in the skip area, after splitting is performed to treat an area starting from the address B as an SRR#n+1, which is new, it is necessary to cause an SRR#n before the address B to be closed and to prohibit recording in the SRR#n.

Incidentally, in a case in which, as described above, splitting of the SRR is performed and the SRR is closed, information representing the case needs to be recorded in a management area on an optical disc. On a Blu-ray Disc, information such as a position of and the state (close or open) of each SRR, and a recordable address in each SRR (this is referred to as an NWA (Next Writable Address)) is recorded in a table referred to as SRRI (Sequential Recording Ranges Information) in a TDMS (Temporary Disc Management Structure) provided in a lead-in area on the inner periphery.

In actuality, updating of such SRRI is performed every time the state of the SRR is changed. However, as described above, since the TDMS is provided in the lead-in area on the inner periphery of the disc, if splitting of the SRR according to the occurrence of a recording error is performed and, according to this, updating of the SRRI is performed, after an optical pickup of an optical disc apparatus is caused to move from a track in which recording is being performed to the lead-in area and the TDMS is updated, it is necessary to cause the optical pickup to return to the track in which recording is being performed and to restart recording. Thus, there is a problem that there is a possibility that the stream data may not be able to be recorded in real time because of the time loss caused by going and returning of the optical pickup.

The present invention is created by considering the above-described points, and is made to propose an optical disc apparatus and a recording control method which are capable of recording, on an optical disc, data at high speed and assuredly.

### Disclosure of Invention

In order to solve such a problem, an optical disc apparatus of the present invention is designed in which recording means for recording data on an optical disc, recording error detection means for detecting a recording error regarding the data on the optical disc, and recording control means for controlling the recording means, when the recording error is detected by the recording error detection means, in a manner such that recording of the data is restarted avoiding recording in a predetermined range starting from an address at which the recording error has occurred are included.

Then, the recording control means is designed to separate a recording area in which the recording of the data is restarted from a recording area including the address at which the recording error has occurred, and also to record, in a management area on the optical disc, information that the recording area has been split when the recording of the data on the optical disc performed by the recording means is completed.

The reoccurrence of a recording error in a portion near a position where the error has occurred and in which there is a high possibility that an error occurs again can be prevented by avoiding recording in a predetermined range starting from an address at which the recording error has occurred, and also time loss in a case in which the management area on the optical disc is updated can be eliminated by recording, in the management area on the optical disc, the information that the recording area has been separated, after the recording of the data is completed. Thus, data can be recorded on the optical disc at high speed and assuredly.

In a recording control method of the present invention, a recording error detection step of detecting a recording error in a case in which data is recorded on an optical disc, and a recording restart step of restarting recording of the data, when the recording error is detected in the recording error detection step, avoiding recording in a predetermined range starting from an address at which the recording error has occurred are included.

In addition, a recording area separation step of separating a recording area in which recording of the data is restarted from a recording area including the address at which the recording error has occurred, and a management area update step of recording, in the management area on the optical disc, information that the recording area has been split when the recording of the data on the optical disc is completed are included.

The reoccurrence of a recording error in a portion near a position where the error has occurred and in which there is a high possibility that an error occurs again can be prevented by avoiding recording in a predetermined range starting from an address at which the recording error has occurred, and also time loss in a case in which the management area on the optical disc is updated during the recording of the data can be eliminated by recording, in the management area on the optical disc, the information that the recording area has been separated, after the recording of the data is completed. Thus, data can be recorded on the optical disc at high speed and assuredly.

According to the present invention, the reoccurrence of a recording error in a portion near a position where the error has occurred and in which there is a high possibility that an error occurs again can be prevented by avoiding recording in a predetermined range starting from an address at which the recording error has occurred, and also time loss in a case in which the management area on the optical disc is updated during the recording of the data can be eliminated by recording, in the management area on the optical disc, the information that the recording area has been separated, after the recording of the data is completed; therefore, an optical disc apparatus and a recording control method capable of recording data on an optical disc at high speed and assuredly can be realized. Brief Description of Drawings

[Fig. 1] Fig. 1 is a block diagram showing an overall structure of an optical disc apparatus.
[Fig. 2] Fig. 2 includes schematic diagrams used to describe splitting SRR in a case in which a recording error occurs.
[Fig. 3] Fig. 3 is a schematic diagram showing a recording state after splitting.
[Fig. 4] Fig. 4 is a timing chart showing recording processing procedures when a recording error occurs.
[Fig. 5] Fig. 5 is a timing chart showing recording processing procedures after trouble occurs.
[Fig. 6] Fig. 6 includes schematic diagrams showing split states of SRR according to another embodiment.
[Fig. 7] Fig. 7 is a schematic diagram showing a recording state of the embodiment.
[Fig. 8] Fig. 8 includes schematic diagrams used to describe a handling method when a recording error occurs.
[Fig. 9] Fig. 9 includes schematic diagrams used to describe a handling method when a recording error occurs. Best Modes for Carrying Out the Invention

One embodiment of the present invention will be described below in detail with respect to the drawings. Embodiment

### (1) Overall Structure of Optical Disc Apparatus

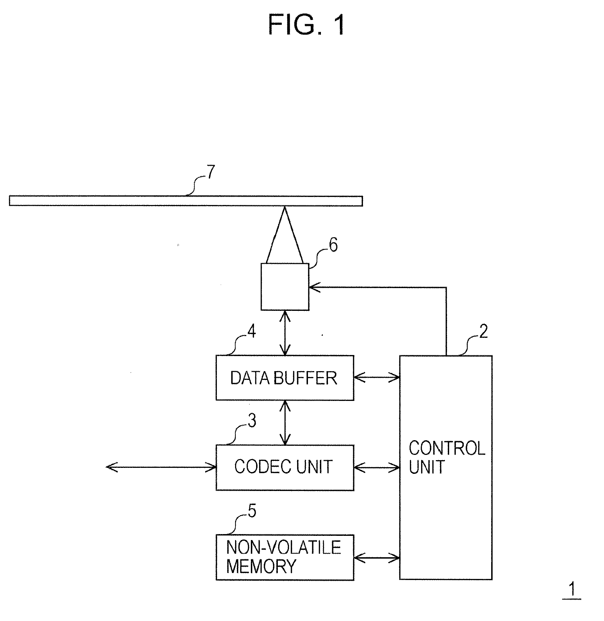

In Fig. 1, 1 denotes an optical disc apparatus which supports Blu-ray discs and employs, in the entirety thereof, the present invention, and which is constituted in a manner such that a codec unit 3, a data buffer 4, and a non-volatile memory 5 are connected to a control unit 2 which controls the whole apparatus.

When video is recorded on an optical disc 7 which is constituted by a Blu-ray disc, the optical disc apparatus 1 causes an externally supplied video signal to be encoded by the codec unit 3 in real time, whereby stream data is generated, and supplies the stream data to an optical pickup 6 while temporarily accumulating the stream data in the data buffer 4.

The optical pickup 6 drives a laser diode (not shown) according to the stream data supplied, and records the stream data by irradiating the optical disc 7 with an optical beam. Here, the control unit 2 controls a sled driving mechanism, which is not shown, and performs control in a manner such that a recording address on a recording surface of the optical disc 7 is irradiated with laser light emitted from the optical pickup 6.

That is, the control unit 2 reads SRRI in a TDMS from a lead-in area on the optical disc 7 loaded, and obtains and stores, in the non-volatile memory 5, various information such as a position of and a state (close or open) of SRR on the optical disc 7 and an NWA indicating a recordable address in each SRR. Then, the control unit 2 treats an NWA in open SRR on the optical disc 7 as a recording start address, and causes pieces of the stream data to be sequentially recorded. In this way, the optical disc apparatus 1 encodes the externally supplied video signal in real time, and records it on the optical disc 7 in real time.

Here, if the control unit 2 detects an occurrence of a recording error according to an out-of-control servo, unperformable address reading, or the like, recording in a portion near the address at which the error has occurred is skipped and splitting the SRR is performed.

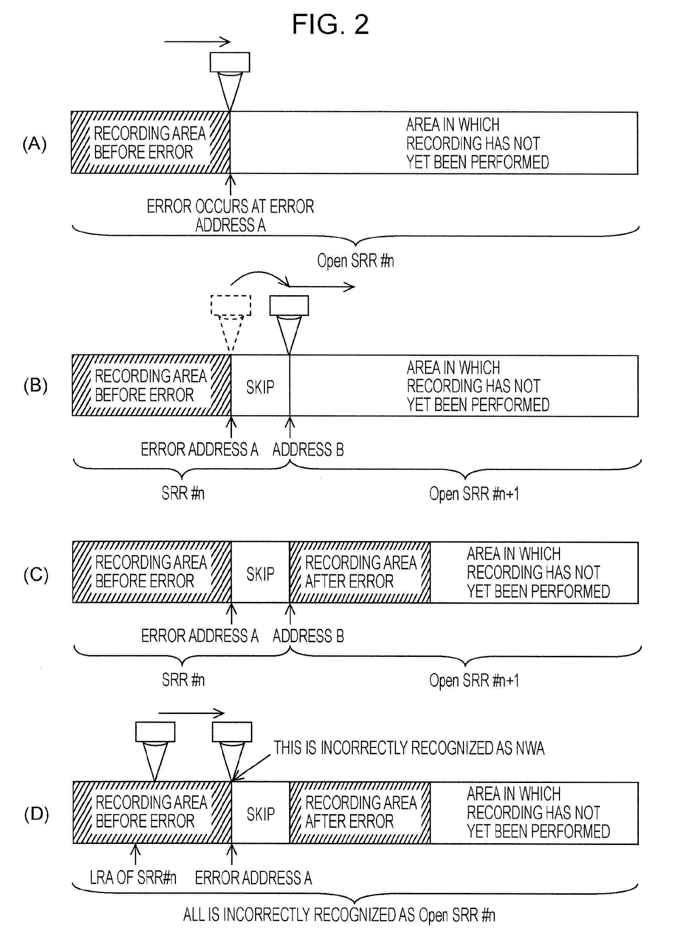

That is, in a case in which a recording error has occurred at an error address A in an SRR#n which is open and in which recording is being performed as shown in part (A) of Fig. 2, as shown in part (B) of Fig. 2, the control unit 2 performs skipping to an address B which is apart from the error address A by a predetermined number of addresses in order to prevent a reoccurrence of a recording error, performs splitting at the address B, and forms an SRR#n+1 which is new and which starts from the address B. In addition, the control unit 2 causes the SRR#n before the address B to be closed and recording therein to be prohibited.

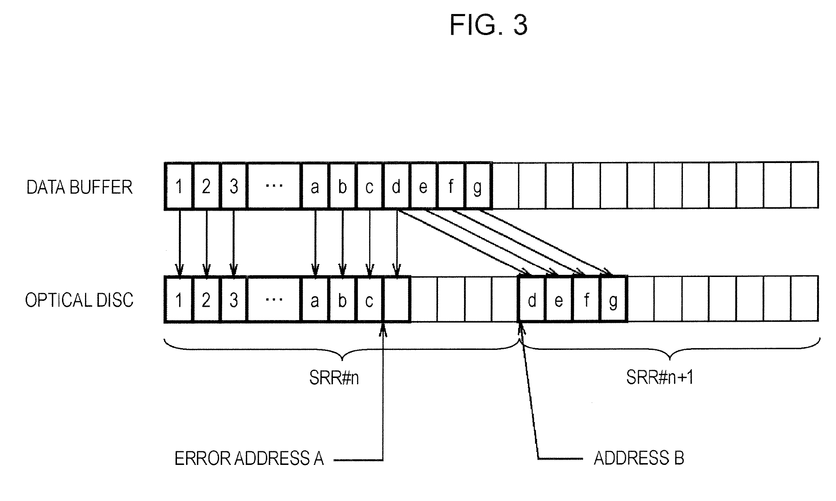

Then, as shown in Fig. 3, the control unit 2 causes stream data starting from data d, which was supposed to be recorded at and after the error address A in the SRR#n, to be recorded at and after the initial address B in the SRR#n+1. Here, the control unit 2 stores the initial address of the SRR#n+1, which is new, in the non-volatile memory 5 and also periodically stores an NWA in the SRR#n+1 in the non-volatile memory 5. At this point in time, the control unit 2 does not update the SRRI of the optical disc 7.

Then, at the point in time when recording of the stream data is completed, the control unit 2 updates the SRRI of the optical disc 7.

In this way, the optical disc apparatus 1 treats, as a skip area, the portion near the position where a recording error has occurred, avoids recording in the portion, and records the stream data in the SRR#n+1 which is newly formed by splitting the SRR at the end point of the skip area, and thereby the reoccurrence of a recording error in the portion near the position where the error has occurred can be prevented. In addition, by performing post updating of the SRRI on the optical disc 7 after recording of the stream data is completed, the optical disc apparatus 1 can eliminate time loss in a case in which the SRRI of the optical disc 7 is updated during recording, and can record the stream data at high speed and assuredly in real time.

However, in a case in which post updating of the SRRI is performed in this way, if trouble such as a power failure occurs from when the SRR is split to when the SRRI is updated and thereby the SRRI cannot be updated, there is a problem that inconsistency occurs between information regarding an actual recording state and the SRRI.

In general, in a case in which a state of SRR is open, an optical disc apparatus searches for an address at which recording can be started in the SRR according to an LRA (Last Recorded Address) recorded in the SRRI. This LRA indicates a sector at the end of where data has been recorded. As a method of searching for such a recordable address, as an example, there is a method in which searching for the end point of a recorded area is performed by reading data sequentially from addresses starting from the address specified by the LRA, an initial address at which data has not been recorded is recognized as an NWA, and recording is restarted from this address. Furthermore, there is another method in which whether or not there is a modulation component of a playback signal is monitored, and an address at which no modulation component exists (that is, no data has been recorded) is recognized as an NWA and recording is restarted from this address.

However, as shown in part (C) of Fig. 2, in a case in which updating of the SRRI has failed in a state in which a recording area before the error and a recording area after the error exist with the skip area therebetween, even if the SRR#n which is closed and not recordable and the SRR#n+1 which is open and recordable actually exist, the optical disc apparatus incorrectly recognizes that, as shown in part (D) of Fig. 2, only the SRR#n which is open exists.

Then, according to old information regarding the SRRI, the old information being obtained before splitting is performed, the optical disc apparatus reads data sequentially from addresses starting from the LRA in the SRR#n shown in part (D) of Fig. 2 and searches for the end point of the recorded area, and incorrectly recognizes, as an NWA, the error address A which is the starting point of the skip area, and starts recording from the error address A. As a result of this, the optical disc apparatus records data in the skip area, in which recording was avoided in order to reduce errors, in the SRR#n and in the recorded area in the SRR#n+1. In particular, in the recorded area in the SRR#n+1, data is overwritten, and thus there is a problem that the recorded stream data cannot be properly played back.

In order to deal with this problem, in a case in which the SRRI on the optical disc 7 cannot be updated because of trouble of some kind, by updating the SRRI according to the initial address of the SRR#n+1 stored in the non-volatile memory 5 and the NWA, the optical disc apparatus 1 of the present invention is designed to avoid performing erroneous recording on the optical disc 7 at the time when the post updating of the SRRI fails.

### (2) Recording Processing Procedures According To Present Invention

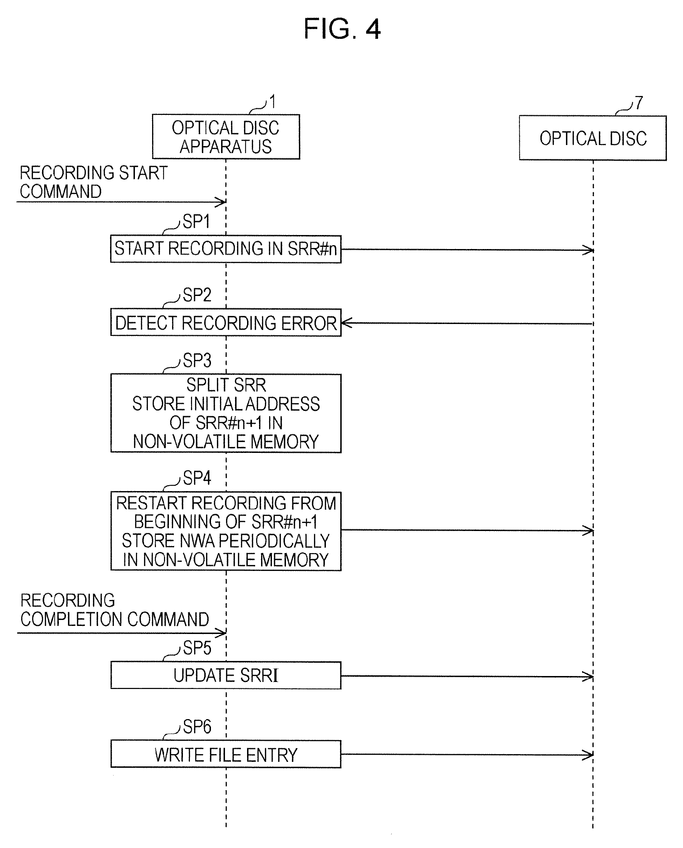

Next, processing procedures will be described in a case in which the stream data is recorded in real time while the above-described NWA is recorded. First, a case in which the SRRI on the optical disc 7 can be properly updated will be described using the timing chart shown in Fig. 4.

According to a recording start command input by a user or from an external appliance, the control unit 2 of the optical disc apparatus 1 records the stream data encoded in real time in the SRR#n, which is open, on the optical disc 7, and also monitors a recording error for the optical disc 7.

Then, when the control unit 2 detects a recording error in step SP2, in next step SP3, as shown in part (B) of Fig. 2, splitting is performed at the address B which is apart from the error address A by a predetermined number of addresses and the SRR#n+1 which is new and which starts from the address B is formed, and also the SRR#n before the address B is closed and the initial address of the SRR#n+1, which is new, (in this case, the address B) is stored in the non-volatile memory 5.

Subsequently, in step SP4, as shown in part (C) of Fig. 2, the control unit 2 restarts recording of the stream data from the initial address B of the SRR#n+1, which is newly formed, and also the NWA is periodically stored in the non-volatile memory 5. Afterwards, when a recording completion command is received from a user or an external appliance, according to this, recording of the stream data on the optical disc 7 is stopped.

Then, after the control unit 2 updates the SRRI on the optical disc 7 in step SP5, in next step SP6, a file entry of the optical disc 7 is rewritten so that the stream data which is partitioned into the SRR#n and the SRR#n+1 and recorded is logically continuous, and completes the recording processing of the stream data.

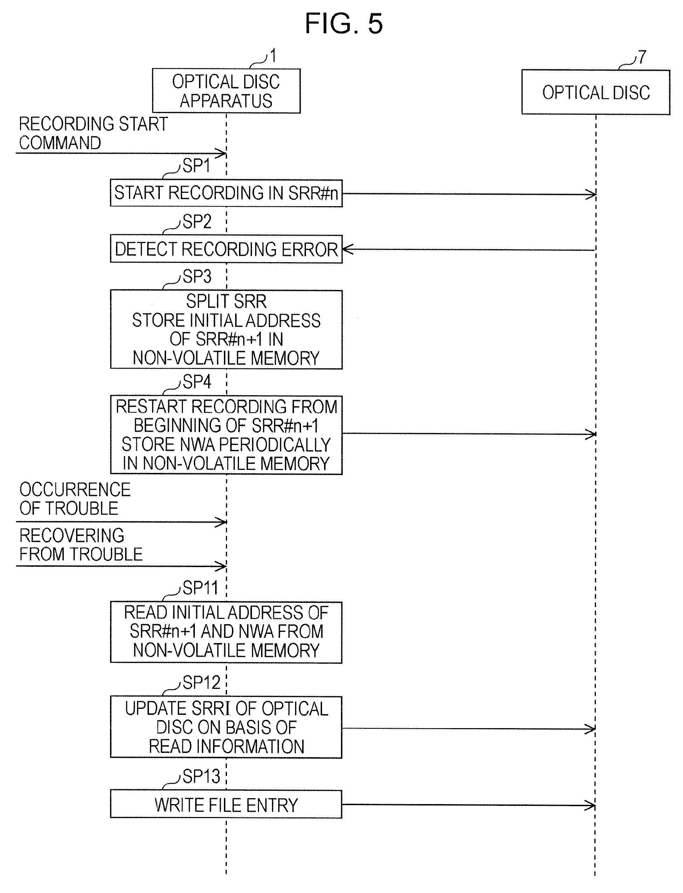

Next, a case in which trouble occurs after the SRR has been split and the SRRI on the optical disc 7 cannot be properly updated will be described using the timing chart shown in Fig. 5. Here, step SP1 through step SP4 in Fig. 5 are the same as processes in the case shown in Fig. 4 in which the SRRI can be properly updated, and thus the description thereof will be omitted.

That is, in a state (step SP4) in which the SRR is split according to the occurrence of a recording error and the stream data is recorded in the SRR#n+1, which is new, for example, after trouble such as a power failure occurring and a recording operation being suspended, the optical disc apparatus 1 recovers from the trouble and restarts the operation.

According to this, in step SP11, the control unit 2 of the optical disc apparatus 1 reads, from the non-volatile memory 5, the initial address (the address B) of the SRR#n+1 stored at the time of splitting and the NWA stored whenever necessary.

Then, in step SP12, after the control unit 2 has rewritten the SRRI of the optical disc 7 in a manner such that "the SRR#n is split and closed, and the NWA read from the non-volatile memory 5 is made to be an NWA of the SRR#n+1", in next step SP13, the control unit 2 rewrites the file entry of the optical disc 7 in a manner such that the stream data, which is partitioned into the SRR#n and the SRR#n+1 and recorded, is logically continuous, and completes the recording processing of the stream data.

In this way, on the basis of recording state information regarding the SRR, the optical disc apparatus 1 can update the SRRI of the optical disc 7 according to an actual recording state of the optical disc 7, the recording state information being stored in the non-volatile memory 5.

### (3) Operation and Effect

With the above-described structure, if the optical disc apparatus 1 detects a recording error at the time of recording the stream data on the optical disc 7 in real time, the optical disc apparatus 1 avoids recording in a portion near a position where the recording error has occurred by treating the portion as the skip area, and records the stream data in the SRR#n+1, which is newly formed by splitting the SRR at the end point of the skip area. Thus, the reoccurrence of a recording error is prevented in the portion near the position where the error has occurred and in which there is a high probability that an error occurs again.

Then, the optical disc apparatus 1 temporarily stores, in the non-volatile memory 5, the information regarding the SRRI which has changed in accordance with splitting, and updates the SRRI on the optical disc 7 after the recording of the stream data is completed. Thus, the optical disc apparatus 1 can eliminate the time loss in a case in which the SRRI of the optical disc 7 is updated during recording and can record the stream data at high speed and assuredly in real time.

In addition, the optical disc apparatus 1 stores the NWA whenever necessary in the non-volatile memory at the time of recording the stream data, and in a case in which trouble occurs after splitting has been performed according to the occurrence of a recording error and the SRRI of the optical disc 7 cannot be updated, the optical disc apparatus 1 reads, from the non-volatile memory 5, the initial address of the SRR which is newly formed by performing splitting and the NWA which has been stored whenever necessary. On the basis of these pieces of recording state information, by updating the SRRI of the optical disc 7 according to information corresponding to the actual recording state of the optical disc 7, the optical disc apparatus 1 can prevent the recorded data from being overwritten.

With the above-described structure, the optical disc apparatus 1 can record the stream data on the optical disc 7 at high speed and assuredly in real time.

### (4) Other Embodiments

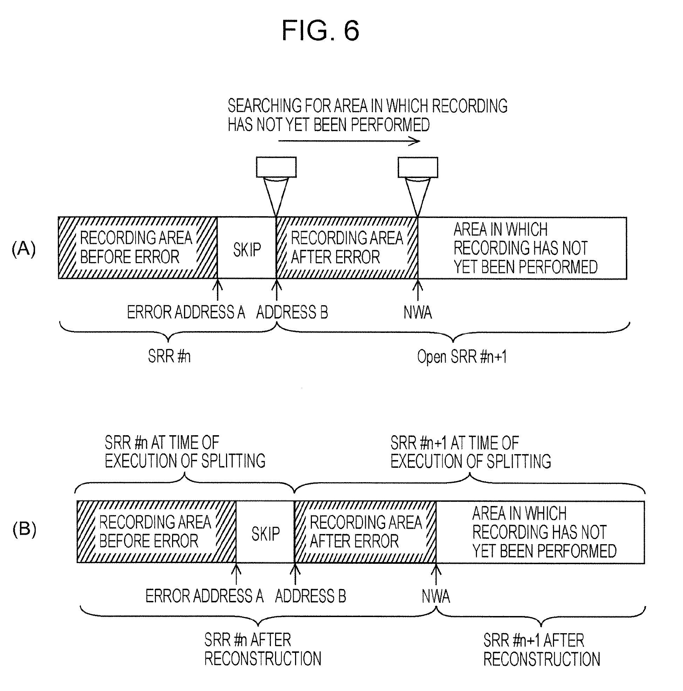

In the above-described embodiment, the initial address of the SRR#n+1, which is new, obtained by performing splitting according to the occurrence of a recording error and the NWA thereof are stored in the non-volatile memory 5, and in a case in which the post updating of the SRRI of the optical disc 7 has failed, an SRR structure similar to that at the time of execution of splitting is reproduced on the basis of the initial address of the SRR#n+1 and the NWA thereof, which are stored, and the SRRI of the optical disc 7 is updated according to information corresponding to the actual recording state of the optical disc 7. However, the present invention is not limited thereto. When only the initial address of the SRR#n+1, which is new, obtained by performing splitting according to the occurrence of a recording error has been stored in the non-volatile memory 5 and in a case in which the post updating of the SRRI of the optical disc 7 has failed, as shown in part (A) of Fig. 6, if splitting is performed at the initial address (the address B), which is stored, of the SRR#n+1, and also searching for an area in which recording has not yet been performed is performed from the beginning of the SRR#n+1 and the SRRI of the optical disc 7 is updated setting, as the NWA of the SRR#n+1, the initial address of the area in which recording has not yet been performed, an operation of storing the NWA whenever necessary in the non-volatile memory 5 can be omitted.

In addition, in the above-described embodiment, the initial address of the SRR#n+1, which is new, obtained by performing splitting according to the occurrence of a recording error and the NWA thereof are stored in the non-volatile memory 5, and in a case in which the post updating of the SRRI of the optical disc 7 has failed, the SRR structure at the time of execution of splitting is reproduced and the SRRI of the optical disc 7 is updated according to the initial address, which is stored, of the SRR#n+1. However, the present invention is not limited thereto. The SRRI of the optical disc 7 may be updated by restructuring the SRR structure so as to match a current recording state of the optical disc 7.

That is, as shown in part (B) of Fig. 6, if splitting is performed at the address of the NWA stored in the non-volatile memory 5, the SRR#n including the recording area before an error, the skip area, and the recording area after the error is closed and also an area starting from the NWA is restructured as the SRR#n+1, which is new, an SRR structure which matches a recording state of the optical disc 7 can be structured although it is different from the SRR structure at the time of execution of splitting. If, according to this, the SRRI of the optical disc 7 is updated, the recorded data can be prevented from being overwritten.

Furthermore, in this case, there is no need to store, in the non-volatile memory 5, the initial address of the SRR#n+1 at the time of performing splitting and only the NWA of the SRR#n+1, which is new, is needed to be stored in the non-volatile memory 5. Thus, the used capacity of the non-volatile memory 5 can be reduced.

In addition, the SRR may be restructured by performing splitting at an address (NWA + α) which is behind the address of the NWA stored in the non-volatile memory 5 by an arbitrary margin α. In this case, a time interval for saving the NWA in the non-volatile memory 5 can be longer.

Furthermore, in the above-described embodiment, as shown in Fig. 3, the stream data starting from the data d which was supposed to be recorded at and after the error address A in the SRR#n is recorded at and after the initial address B in the SRR#n+1. However, the present invention is not limited thereto. In order to record, at and after the initial address B in the SRR#n+1, pieces of desired data in the stream data, for example, in order to cause the stream to be matched to an aligned unit boundary or the like in MPEG (Motion Picture Experts Group) 2 - TS (Transport Stream), the stream data recorded before the error address A may be recorded again at and after the initial address of the SRR#n+1.

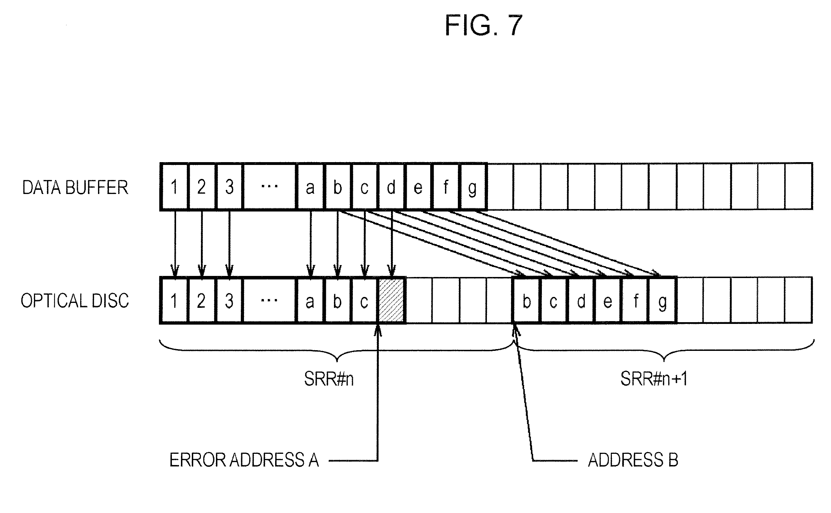

For example, as shown in Fig. 7, according to the occurrence of a recording error at the error address A in a state in which stream data up to the data d has been recorded in the SRR#n, splitting is performed at the address B which is across the skip area and the stream data starting from the data b which has been properly recorded at a point in time before the occurrence of the recording error may be recorded in the SRR#n+1, which is new.

In this case, although the data b and data c are recorded in both of the SRR#n and the SRR#n+1, the recording of redundant data can be avoided by not registering, in the file entry, the data b and c which have been recorded in the SRR#n.

### Industrial Applicability

The present invention may be widely applied to cases in which data is recorded on an optical disc at high speed.

## Claims

1. An optical disc apparatus, **characterized by** comprising:
recording means for recording data on an optical disc;
recording error detection means for detecting a recording error regarding the data on the optical disc; and
recording control means for controlling the recording means, when the recording error is detected by the recording error detection means, in a manner such that recording of the data is restarted avoiding recording in a predetermined range starting from an address at which the recording error has occurred.

2. The optical disc apparatus according to Claim 1, **characterized in that:**
the recording control means separates a recording area in which the recording of the data is restarted from a recording area including the address at which the recording error has occurred, and also records, in a management area on the optical disc, information that the recording area has been split when the recording of the data on the optical disc performed by the recording means is completed.

3. The optical disc apparatus according to Claim 2, **characterized in that:**
the recording control means stores, in storage means, whenever necessary, a recording address of the data on the optical disc, and, in a case in which the information that the recording area has been split cannot be recorded in the management area on the optical disc, reproduces a split state of the recording area according to the recording address stored in the storage means and records the split state in the management area on the optical disc.

4. A recording control method, **characterized by** comprising:
a recording error detection step of detecting a recording error in a case in which data is recorded on an optical disc; and
a recording restart step of restarting recording of the data, when the recording error is detected in the recording error detection step, avoiding recording in a predetermined range starting from an address at which the recording error has occurred.

5. The recording control method according to Claim 4, **characterized by** comprising:
a recording area separation step of separating a recording area in which recording of the data is restarted from a recording area including the address at which the recording error has occurred; and
a management area update step of recording, in the management area on the optical disc, information that the recording area has been split when the recording of the data on the optical disc is completed.

6. The recording control method according to Claim 5, **characterized by** comprising:
a recording address storing step of storing, in storage means, whenever necessary, a recording address of the data on the optical disc; and
a step of reproducing a split state of the recording area, when the information that the recording area has been split cannot be recorded in the management area on the optical disc, according to the recording address stored in the storage means, and of recording the split state in the management area on the optical disc.
